(19)

**Europäisches Patentamt**
**European Patent Office**
**Office européen des brevets**

(11) **EP 1 623 782 B1**

(12) **EUROPÄISCHE PATENTSCHRIFT**

(45) Veröffentlichungstag und Bekanntmachung des Hinweises auf die Patenterteilung:
**26.09.2012 Patentblatt 2012/39**

(51) Int Cl.:
**B23D 35/00** *(2006.01)*

(21) Anmeldenummer: **05010717.6**

(22) Anmeldetag: **18.05.2005**

(54) **Verfahren und Vorrichtung zum Umformen und Schneiden von hochfesten Blechen**

Apparatus and method for forming and cutting high-strength sheets

Procédé et appareil de formage et pour découper un matériau en feuillard à haute résistance

(84) Benannte Vertragsstaaten:
**DE ES FR IT**

(30) Priorität: **05.08.2004 DE 102004038226**
**06.05.2005 DE 102005021027**

(43) Veröffentlichungstag der Anmeldung:
**08.02.2006 Patentblatt 2006/06**

(73) Patentinhaber: **Schuler Pressen GmbH**
**73033 Göppingen (DE)**

(72) Erfinder: **Fahrenbach, Jürgen**
**73101 Aichelberg (DE)**

(74) Vertreter: **Rüger, Barthelt & Abel**
**Webergasse 3**
**73728 Esslingen (DE)**

(56) Entgegenhaltungen:
DE-A1- 2 739 825    SU-A1- 925 560
US-A- 2 191 826    US-A- 3 183 575
US-A- 4 742 742    US-A- 5 044 243

EP 1 623 782 B1

**Beschreibung**

Die Erfindung betrifft ein Verfahren sowie eine Vorrichtung zum Unformen und Zum Schneiden von hochfesten, wenig oder nicht duktilen Blechen.

In der Praxis stellt sich zunehmend die Aufgabe, hochfeste wenig oder nicht duktile Bleche, insbesondere martensitisch gehärtete Bleche (Stahlbleche) durch Scheren zu trennen. Dies ist beispielsweise im Rahmen der Herstellung von hochfesten Kraftfahrzeug-Karosserieteilen erforderlich, wie sie zunehmend Anwendung finden. Zum Trennen solcher hochfesten Bleche werden in der Praxis gerne Laserschneidanlagen eingesetzt. Diese haben jedoch eine begrenzte Produktivität.

Der Versuch, solche martensitisch gehärteten Bleche mittels Stanzwerkzeugen entlang vorgegebener Schnittkonturen zu trennen, führt zu extremem Verschleiß an den Schneidkanten des Stanzwerkzeugs. Außerdem sind die so erzeugten Schneidkanten häufig ungenau oder rau. Dieser Nachteil entfällt beim Schneiden mittels Laserschneidanlage, wobei jedoch die Integration von Laserschneidanlagen z.B. in Umformwerkzeuge für Karosserieteile zumindest schwierig ist. Außerdem geben Umformanlagen, wie beispielsweise Stufenpressen, dann den Arbeitstakt vor, so dass für die auszuführenden Schneidvorgänge nur sehr kurze Zeitspannen zur Verfügung stehen.

Aus der DE-A-27 39 825 ist eine Schrottschere bekannt, die zum Zerteilen eines Schrottstrangs dient. Der Schrottstrang enthält verschieden deformierte Metallteile, die ein mehr oder weniger loses Band bilden. Vor dem Einlauf in den Scherspalt, wird dieses Band komprimiert. In komprimiertem Zustand wird es zwischen einem ortsfesten Untermesser und einem beweglichen Obermesser zerteilt. An dem Obermesser ist ein Biegestempel angebracht, der den Schrottstrang verbiegt bevor das Obermesser einen Schnitt anbringt. Durch die Biegebeanspruchung brechen sprödere Materialien häufig schon nach dem Aufsetzen des Obermessers durch, so dass diese Materialbestandteile nicht mehr von dem Obermesser zerteilt werden müssen.

Aus der US-A-4 742 742 ist eine Schneideinrichtung zum Schneiden relativ weicher Flächengebilde, wie beispielsweise Flausch- oder Klettbänder, Ornamentbänder, länglicher Textilstreifen, Papierstreifen oder ähnliches bekannt. Die Schneidvorrichtung weist ein Untermesser und ein Obermesser auf. Zu beiden Seiten des Obermessers sind federnd gelagerte Druckelemente angeordnet. Das auf der stromabwärtigen Seite des Obermessers angeordnete leistenartige Druckelement drückt gegebenenfalls unter Zuhilfenahme einer Bürste den abgeschnittenen Teil von dem Messer weg nach unten, so dass er bei der oszillierenden Aktion des Messers nicht erneut in den Scherspalt gelangt.

Die US-A-3 183 575 offenbart eine Vorrichtung zur Herstellung von Streckmetall mit einem gezahnten Obermesser zum Einbringen von Schnitten in ein Blech, die später in einem Streckvorgang zu parallelogrammförmigen Öffnungen aufgeweitet werden.

Die FR-A-2 690 097 offenbart ein Verfahren und eine Vorrichtung Zum Stanzen von Buchen und bildet den nächsten Stand der Technik. Von diesem Dokument ist bekannt das Blech Zuerst zu Klemmen und dann von und während der Schnittoperation einer Biege beanspruchung auszusetzen. Obere und untere Halteeinrichtungen sind jedoch nicht Zueinander Fluchtend angeordnet.

Davon ausgehend ist es Aufgabe der Erfindung, ein schnelles und verlässliches Verfahren zum Schneiden von hochfesten Blechen anzugeben, das eine gute Standzeit der verwendeten Schneidwerkzeuge ermöglicht.

Diese Aufgabe wird mit dem Verfahren nach Anspruch 1 wie mit der Vorrichtung nach Anspruch 11 gelöst:

Das erfindungsgemäße Verfahren beruht auf einem herkömmlichen Schervorgang, bei dem ein Werkstück durch Einleiten ausreichend großer Schubspannungen zerteilt wird. Erfindungsgemäß werden diesen Schubspannungen Zugspannungen überlagert, die die Einleitung der Werkstücktrennung begünstigen. Diese Zugspannung bzw. Zugkraftkomponente wirkt quer zu der gewünschten, zu erzeugenden Biegelinie. Die Zugspannungen werden durch eine Biegebeanspruchung des Werkstücks erzeugt. Die Biegebeanspruchung wird dabei vorzugsweise derart gewählt, dass die entstehende Zugspannung an einer dem Schneidwerkzeug zugewandten Seite des Werkstücks liegt.

Durch die gleichzeitige Biegebeanspruchung und Scherbeanspruchung des zu trennenden Werkstücks wird die Ausbildung einer Trennebene in dem zu trennenden Werkstück wesentlich begünstigt. Es kommt zu einer drastischen Verminderung der Schnittkräfte und einer ebenso drastischen Verminderung des Werkzeugverschleißes bei gleichzeitiger Verbesserung der Schnittflächenqualität.

Bei einer bevorzugten Ausführungs- und Durchführungsform der Erfindung wird ein auf einer Seite der Schnittkontur liegender Blechabschnitt zwischen einem Niederhalter und einer Auflagefläche fest eingespannt. Der fest eingespannte Teil des Blechs ist vorzugsweise der Nutzteil, während der jenseits der Schnittlinie ausragende nicht eingespannte Teil vorzugsweise das Abfallstück bildet. Der Niederhalter wird dabei vorzugsweise mit einer derart großen Niederhalterkraft beaufschlagt, dass die durch die Vorbiegung in das Blech eingeleiteten Zugspannungen in unmittelbarer Nachbarschaft zu der Schnittkontur drastisch reduziert wird. Es hat sich herausgestellt, dass es zweckmäßig ist, wenn das Verhältnis zwischen Niederhalterbreite und Blechdicke ca. 6 beträgt.

Die Vorbiegung des Blechs vor Durchführung des eigentlichen Trennvorgangs kann unmittelbar vor Durchführung des Schneidvorgangs erfolgen. Dazu kann an dem eigentlichen Schneidwerkzeug ein Vorsprung vorgesehen sein, der bei Durchführung des Schneidvorgangs, kurz bevor die Schneidkante des Schneidwerkzeugs auf das Blech trifft, bereits auf dem Blech aufsetzt. In diesem Fall sind der Abstand des Vorsprungs von der Schneidkante und die Voreilung in Bezug auf die Schneidkante so gewählt, dass die Zugspannung in dem zu trennenden Blech an der Schnittkontur die blechtypische Fließspannung gerade noch nicht erreicht hat, wenn die Schneidkante auf dem Blech auftrifft. Dazu hat es sich als zweckmäßig herausgestellt, wenn der Abstand zwischen der Schneidkante und dem Vorsprung in einem Größenbereich liegt, der auf die Blechdicke und die Größe des Vorsprungs abgestimmt ist.

Alternativ ist es möglich, die Vorbiegeeinrichtung von dem Schneidmesser getrennt auszubilden. Beispielsweise kann dies mit einem gesonderten Element erfolgen, das unabhängig von dem Schneidmesser bewegbar ist. Dieses Element kann vor Beginn des Schervorgangs dazu genutzt werden, eine geeignete Biegespannung und somit Zugspannung in das Blech einzuleiten. Das betreffende Element kann sowohl positionsgeregelt als auch kraftgeregelt bewegt werden. In ersterem Fall kann es das Blech vorbiegen und dann in dieser Position stehen bleiben, während von dem Schneidmesser getrennt wird. Alternativ kann der Ort, d.h. die Position des entsprechenden vorspannenden Elements auch kontrolliert während des Schneidvorgangs des Schneidmessers verlagert werden.

Im Falle der kontrollierten Kraftbeaufschlagung ist das Vorbiegeelement beispielsweise durch hydraulische Elemente fallbezogen einstellbar. Es ist dann möglich, die Vorbiegekraft während des Schneidvorgangs konstant zu halten oder nach einem vorgegebenen Zeitprofil oder einem vorgegebenen, von der Position des Schneidmessers abhängigen Profil zu variieren. Alle genannten Einflussgrößen können zu einer Optimierung der Werkzeugstandzeit und der Qualität der zu erzeugenden Trennfläche genutzt werden.

Das geeignete Verfahren kann sowohl in einer gesonderten Schervorrichtung als auch in Stanzvorrichtungen oder als Teil eines sonstigen Umformwerkzeugs Anwendung finden. Entsprechend kann die Vorrichtung eine Schervorrichtung, eine Stanzvorrichtung oder auch ein Teil eines Umformwerkzeugs, beispielsweise innerhalb einer Blechteilstufenpresse, ausgebildet sein.

Weitere Einzelheiten vorteilhafter Ausführungsformen der Erfindung ergeben sich aus der Zeichnung, der Beschreibung oder aus Ansprüchen. In der Zeichnung sind Ausführungsbeispiele der Erfindung veranschaulicht. Es zeigen:

Figur 1        eine Blechteilstufenpresse in schematisierter Frontalansicht,

Figur 2        die Draufsicht auf ein schematisch veranschaulichtes Werkstück,

Figur 3 bis 6  ein Werkzeug zum Trennen von Blechteilen für die Stufenpresse gemäß Figur 1 in schematisierter vertikal geschnittener, ausschnittsweiser Darstellung in verschiedenen Arbeitsstadien beim Trennen des Blechteils,

Figur 7 bis 10  eine abgewandelte Ausführungsform des Werkzeugs für die Stufenpresse nach Figur 1 in schematisierter, vertikal geschnittener, ausschnittsweiser Darstellung in verschiedenen Arbeitsstadien und

Figur 11        das Werkstück während des Trennvorgangs in vergrößerter, ausschnittsweiser, schematisierter Darstellung.

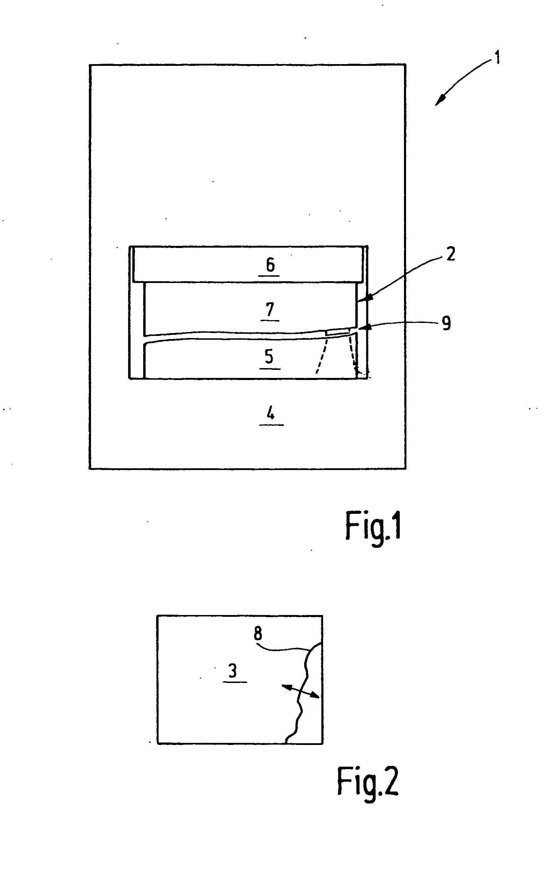

In Figur 1 ist eine Stufenpresse 1 zum Umformen von Blechteilen mit Blick auf ein dazu vorgesehenes Werkzeug 2 veranschaulicht. Das Werkzeug 2 dient der Durchführung zumindest einer Trennoperation und gegebenenfalls weiterer Umformoperationen. Außerdem kann die Stufenpresse 1 weitere Werkzeuge aufweisen, wobei das Werkstück 3 (schematisch veranschaulicht in Figur 2) dann von Werkzeug zu Werkzeug weiter gegeben wird. Eine dazu vorgesehene Transfereinrichtung ist nicht weiter veranschaulicht.

Das Werkzeug 2 weist ein auf einem Pressentisch 4 ortsfest gelagertes Unterwerkzeug 5 und ein an dem Stößel 6 der Presse gelagertes Oberwerkzeug 7 auf. Im Arbeitstakt der Presse öffnet und schließt das Werkzeug 2, wobei dabei jeweils ein Werkstück bearbeitet wird. Beim Schließen des Werkzeugs 2 setzt das Oberwerkzeug 7 auf dem Unterwerkzeug 5 auf.

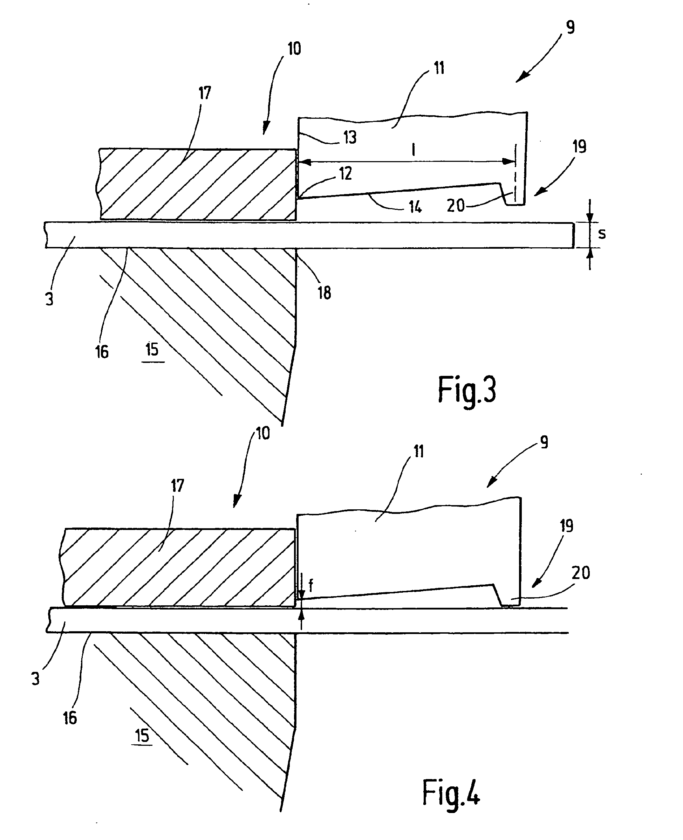

Bei der Bearbeitung des Werkstücks 3 ist an diesem eine Schnittoperation durchzuführen und zwar entlang einer in Figur 2 schematisch veranschaulichten Schnittkontur 8. Diese kann gerade oder krummlinig begrenzt sein. Durch Durchführung des Schnittvorgangs weist das Werkzeug 2, wie aus Figur 3 ersichtlich, eine Schneideinrichtung 9 auf. Zu dieser gehören eine Werkzeugklemmeinrichtung 10 und ein Schneidmesser 11. Das Schneidmesser 11 kann auch als Schneidstempel bezeichnet werden. Es ist ortsfest an dem Oberwerkzeug 7 gelagert oder Teil desselben. An dem Schneidmesser 11 ist eine Schneidkante 12 ausgebildet, die die Form der Schnittkontur 8 festlegt und dieser entspricht. Die Schneidkante 12 wird von zwei Flächen 13, 14 begrenzt, die vorzugsweise in einem Winkel von etwas kleiner 90°, d.h. einem spitzen Winkel, zueinander orientiert sind.

Die Werkstückklemmeinrichtung 10 wird durch ein Werkstücklager 15 mit dem Werkstück 3 zugewandter Auflagefläche 16 sowie einem Blechhalter 17 gebildet. Das Werkstücklager 15 ist mit dem Unterwerkzeug 5 verbunden oder Teil desselben. Es endet an der Schnittkontur mit einer entsprechenden Kante 18, bei der die angrenzenden Flächen einen rechten oder etwas spitzen Winkel miteinander bilden.

Der Blechhalter 17 ist an dem Oberwerkzeug 7 gelagert und mittels einer z.B. hydraulischen Vorspanneinrichtung gegen das Werkstück 3 vorgespannt. Beim Niedergehen des Oberwerkzeugs 7 setzt der Blechhalter 17 auf dem Werkstück 3 auf bevor das Schneidmesser 11 das Werkstück 3 berührt. Sodann presst der Blechhalter 17 das Werkstück 3 fest gegen die Auflagefläche 16.

Zu der Schneideinrichtung 9 gehört weiter eine Vorbiegeeinrichtung 19, die dazu dient und eingerichtet ist, das Werkstück 3 vor und gegebenenfalls während der Durchführung des Schneidvorgangs mit einer Biegebeanspruchung zu beaufschlagen. Die Vorbiegeeinrichtung 19 wird im einfachsten, in Figur 3 bis 6 veranschaulichten, Fall durch einen Vorsprung 20 gebildet, der an dem Schneidmesser 11 oder Schneidstempel in Richtung auf das Werkstück 3 vorspringend ausgebildet ist. Er überragt die Fläche 14 und auch die Schneidkante 12 insoweit in Richtung auf das Werkstück 3, dass er vor der Schneidkante 12 auf dem Werkstück 3 aufsetzt. Der Vorsprung 20 ist vorzugsweise eine Rippe, die in fest gelegtem Abstand a zu der Schneidkante 12 angeordnet ist. Vorzugsweise weist der Vorsprung 20 entlang seiner Längserstreckung überall die gleiche Höhe h auf, die, wie in Figur 1 angedeutet, in Bezug auf die Schneidkante 12 bzw. eine Ebene gemessen wird, die parallel zu der Auflagefläche 16 angeordnet ist und die von der Oberseite des Werkstücks 3 festgelegt ist, auf der die Schneidkante 12 in Figur 3 ruht. Zwischen der Schneidkante 12 und dem Vorsprung 20 ist ein konkaver (hohler) Flächenbereich angeordnet, der zum Teil von der Fläche 14 begrenzt ist.

Die Beziehung zwischen dem Abstand 1 und der Höhe f sowie der Blechdicke s ergibt sich aus:

$$\sigma = \frac{Mb}{wb}$$

$$\sigma = \frac{F \cdot l \cdot 6}{b \cdot h^2}$$

$$f = \frac{F \cdot l^3}{3 \cdot E \cdot I}$$

$$I = \frac{b \cdot h^3}{12}$$

$$f = \frac{R_{0,2} \cdot l^2}{E \cdot s} \cdot \frac{2}{3} \quad ,$$

wobei: $R_{0,2}$ = Fließgrenze
l = Abstand
E = Elastizitätsmodul
S = Blechdicke

Außerdem ist vorzugsweise l/f = k · s mit k = 0,8 ... 5.

Der Vorsprung 20 muss nicht zwangsläufig als durchgehende Rippe ausgebildet sein. Es ist auch möglich, eine Reihe von Einzelvorsprüngen vorzusehen. Auch können diese jeweils einzeln höhenverstellbar sein, um in Abhängigkeit vom konkreten Verlauf der Schnittkontur 8 geeignete Anpassungen vorzunehmen. Beispielsweise kann es zweckmäßig sein, die Höhe h in Bereichen abweichend festzulegen, in denen die Schnittkontur 8 engere Krümmungen durchläuft.

Das insoweit beschriebene Werkzeug arbeitet wie folgt:

Bei Durchführung eines Schneidvorgangs bewegt sich das Oberwerkzeug 7 auf das Unterwerkzeug 5 zu. Es setzt dann der Blechhalter 17 auf dem Werkstück 3 auf und presst diesen mit großer Anpresskraft gegen die Auflagefläche 16. Zwischen dem Blechhalter 17 und der Fläche 13 des Schneidmessers 11 verbleibt ein geringer Spalt, der vorzugsweise ungefähr dem Schneidspalt entspricht, wie er zwischen der Kante 18 und der Fläche 13 des Schneidmessers 11 festgelegt ist.

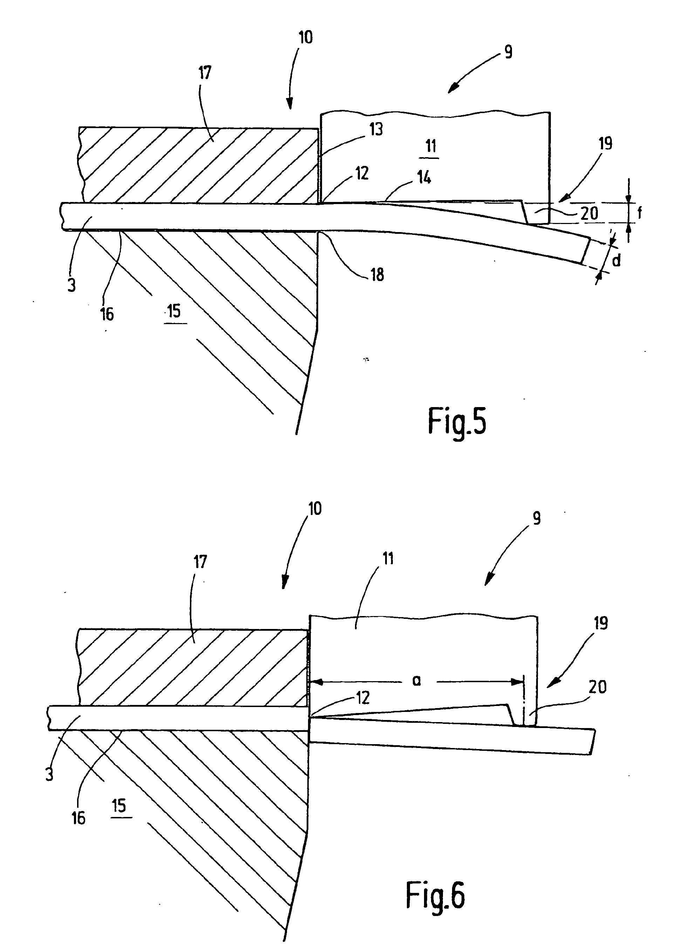

Während der Blechhalter 17 auf dem Werkstück 3 aufsitzt bewegt sich das Oberwerkzeug 7 weiter nach unten. Es trifft dann der Vorsprung 20 auf dem Werkstück 3 auf und biegt dieses in seiner weiteren Abwärtsbewegung nach unten. Durch diese Biegebeanspruchung entsteht eine so hohe Biegezugspannung, insbesondere unmittelbar im Anschluss an den Blechhalter 17, d.h. im Bereich der zu erzeugenden Schnittkontur. Mit weiterer Abwärtsbewegung des Schneidmessers 11 nimmt die Zugspannung zu, wobei sie jedoch die Fließgrenze des Materials nicht erreicht. Es trifft dann, wie Figur 5 veranschaulicht, die Schneidkante 12 auf der Oberseite des Werkstücks 3 auf und beginnt, dieses mit einer Schubspannung zu beaufschlagen. Diese ergibt zusammen mit der bereits eingeleiteten Zugspannung eine Vergleichsspannung, die zur Materialtrennung führt. Dies veranschaulicht Figur 6. Mit beginnendem Trennvorgang entspannt sich der bislang gebogene Blechabschnitt wieder.

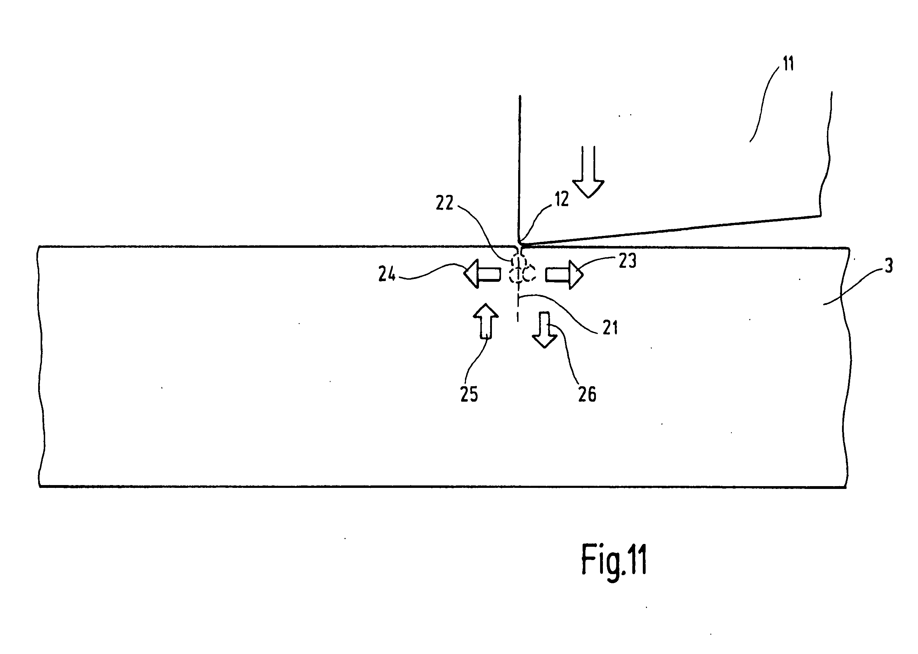

Der insoweit beschriebene Schneidvorgang geht mit geringen Kräften an der Schneidkante 12 und mit geringem Werkzeugverschleiß einher. Es werden hohe Trennflächen- oder Schnittflächenqualitäten erreicht. Die sich ausbildende Trennebene 21 kann, wie in Figur 11 veranschaulicht ist, einzelne Körner oder Kristallite 22 des Werkstücks 3 durchtrennen. Dies wird durch die Beaufschlagung mit den sehr hohen, in Figur 11 durch Pfeile 23, 24 veranschaulichte, Zugspannungen möglich, die vorzugsweise größer sind als die eingeleiteten Schubspannungen (Pfeile 25, 26). Dies führt zu sehr glatten Schnitt- oder Bruchflächen.

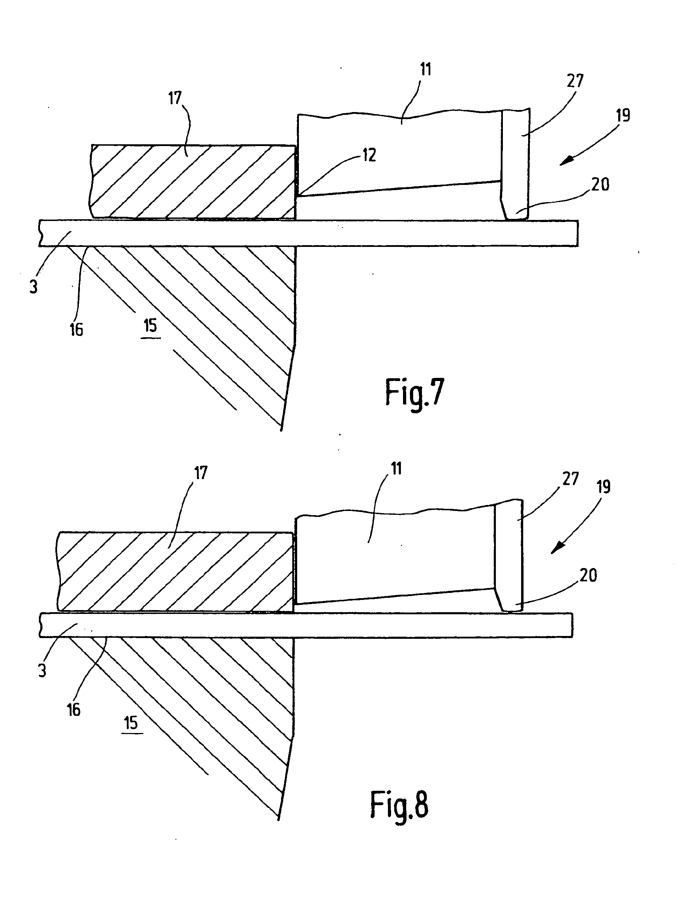

Die Figuren 7 bis 10 veranschaulichen eine verfeinerte Ausführungsform, bei der das Schneidmesser 11 und die Vorbiegeeinrichtung 19 voneinander unabhängig oder getrennt ausgebildet sind. Die Vorbiegeeinrichtung 19 wird jeweils durch ein gesondertes Vorspannelement 27 gebildet, das in Nachbarschaft zu dem Schneidmesser 11 und im Abstand zu dessen Schneidkante 12 angeordnet ist. Das Vorbiegeelement 27 kann beispielsweise mit einer Vorspanneinrichtung mit dem Oberwerkzeug 7 verbunden sein. Die Vorspanneinrichtung kann beispielsweise ein unter einem vorgegebenen Druck stehender Hydraulikzylinder sein, der das Vorbiegeelement 27 mit einer definierten Kraft beaufschlagt, um das Werkstück 3 definiert zu biegen, d.h. vorzuspannen. Der Arbeitsablauf ist dann folgendermaßen:

Nach Aufsetzen des Blechhalters 17 und Spannen desselben gegen das Werkstück 3 setzt das Vorbiegeelement 27 auf dem Werkstück 3 auf, wie in Figur 7 veranschaulicht ist. Während sich das Oberwerkzeug 7 und mit diesem das Schneidmesser 11 weiter auf das Werkstück 3 zu bewegt, baut die dem Vorbiegeelement 27 zugeordnete Vorspanneinrichtung eine Kraft auf. Diese Phase ist in Figur 8 veranschaulicht, in der das Werkstück 3 noch nicht wesentlich gebogen ist.

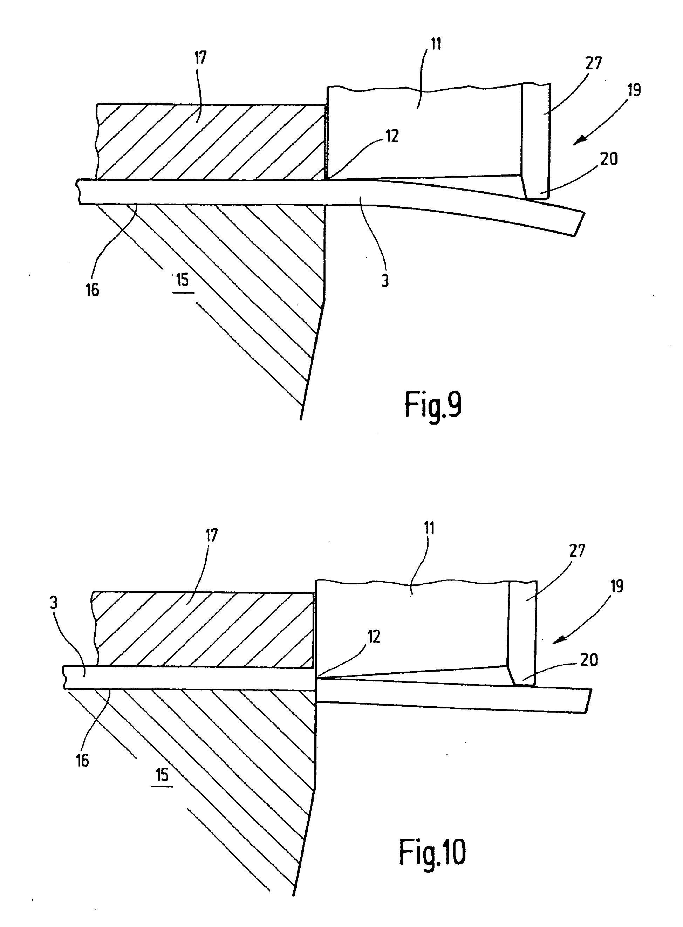

Spätestens wenn die Schneidkante 12, wie in Figur 9 veranschaulicht, auf dem Werkstück 3 aufsetzt, bringt das Vorbiegeelement 27 auch die nötige Vorspannkraft auf, um das Werkstück 3 bis kurz vor die Fließgrenze des Materials vorzuliegen bzw. vorzuspannen. Das Abscheren erfolgt dann, gemäß Figur 10, mit lediglich noch geringer Scherkraft, indem das Schneidmesser 11 in das Material des Werkstücks 3 an der Schnittlinie 3 eindringt und Schubspannung einleitet. Übersteigt die Zugspannung jedoch die Fließgrenze, kann es nachteilig zu Mikrorissen im Material kommen. Vorsichtigerweise geht man deshalb nicht an die Bruchgrenze sondern an die Fließgrenze.

Wie bei dem vorstehend beschriebenen Ausführungsbeispiel wird auch hier der überwiegende Teil der zum Trennen des Materials erforderlichen Spannung durch die Vorbiegeeinrichtung 19 aufgebracht, während der eher kleinere Teil der Materialspannung durch das Schneidmesser 11 eingeleitet wird. Somit ist der Beitrag der Vorbiegeeinrichtung 19 zur Vergleichsspannung σv größer als der Beitrag des Schneidmessers 11. Es gilt:

$$\sigma v = \sqrt{\sigma^2 + 3\tau^2} \; ,$$

wobei σv die Vergleichsspannung,
σ die Zugspannung,
τ die Schubspannung symbolisiert und wobei $3\tau^2 < \sigma^2$.

In Abwandlung der im Zusammenhang mit den Figuren 7 bis 10 beschriebenen Ausführungsform ist es auch möglich, die von dem Vorbiegeelement 27 aufgebrachte Kraft während des Schneidvorgangs zu modulieren, d.h. nach vorgegebener Zeitabhängigkeit oder vorgegebener Abhängigkeit von der Position des Schneidmessers 11 kontrolliert zu beeinflussen. Dadurch kann die Schnittqualität weiter beeinflusst werden. Beispielsweise ist es möglich, die Vorbiegekraft nach Einleitung des Trennvorgangs wesentlich zu reduzieren. Auch ist es möglich, gezielt an- und abschwellende Kräfte einzusetzen oder die Vorbiegekraft entlang der gewünschten Schnittkontur 8 zu variieren. Beispielsweise kann die Vorbiegekraft in konkaven Schnittlinienbereichen größer als in konvexen Schnittlinienbereichen festgelegt werden oder es können sonstige Verlaufsprofile angewandt werden.

Ein erfindungsgemäßes Verfahren zum Schneiden von hochfesten, insbesondere nicht duktilen Blechen, insbesondere Stahlblechen, stellt eine Kombination aus einem Brech- und einem Schneidverfahren dar. Bei diesem Verfahren wird das zu trennende Material bis kurz unter die Fließgrenze vorgespannt und dann einem Schneidvorgang unterzogen. Es ergibt sich eine wesentlich erhöhte Standzeit des Werkzeugs in Verbindung mit zugleich wesentlich verbesserter Flächengüte der Trennfläche im Vergleich zu reinen Brech- oder reinen Schneidverfahren.

## Patentansprüche

1. Umformverfahren zur Herstellung von Karosserieteilen aus hochfeste, wenig oder nicht duktile Blechen, insbesondere aus martensitischem Stahl, in einem Werkzeug (2),
mit mindestens einem Schritt zum Umformen des Blechteils (3) und
mit mindestens einem Schritt, bei dem in dem Werkzeug (2) entlang einer Schnittkontur (8) eine Schnittoperation durchgeführt wird,
wobei das Blechteil (3) vor und während der Schnittoperation einer Biegebeanspruchung ausgesetzt wird, die eine wesentliche Zugkraftkomponente quer zu der gewünschten Schnittkontur (8) verursacht,
wobei durch die Biegebeanspruchung die Fließgrenze des Materials des Blechteils (3) nicht erreicht wird,
wobei das Blechteil (3) vor und während der Schnittoperation zwischen einem Blechhalter (17) und einem Werkstücklager (15) des Werkzeugs festgeklemmt wird, deren Stirnflächen genau zueinander fluchtend angeordnet sind.

2. Umformverfahren nach Anspruch 1, **dadurch gekennzeichnet, dass** das Blechteil (3) an einer Seite der zu erzeugenden Schnittkontur (8) zwischen einer Auflagefläche (16) und einem Werkstückhalter (17) festgeklemmt wird.

3. Umformverfahren nach Anspruch 2, **dadurch gekennzeichnet, dass** die Festhaltekraft so groß ist, dass die durch die Biegung verursachten Zugspannungen unmittelbar an der Schnittkontur (8) von dem Werkstückhalter (17) aufgenommen werden.

4. Umformverfahren nach Anspruch 1, **dadurch gekennzeichnet, dass** die in das Blechteil (3) eingeleitete Zugspannung nahe an der Fließgrenze des jeweiligen Materials festgelegt ist, aus dem das Werkstück besteht.

5. Umformverfahren nach Anspruch 1, **dadurch gekennzeichnet, dass** die durch die Vorbiegung in das Blechteil (3) eingeleitete Zugspannung an der Seite des Blechteils (3) erzeugt wird, von der her auch das Schneidmesser in das Blechteil (3) eindringt.

6. Umformverfahren nach Anspruch 1, **dadurch gekennzeichnet, dass** die Belastung des Blechteils (3) mit dem Biegemoment, das an der Schnittlinie (8) eine Zugspannung (23, 24) erzeugt, mittels eines an einem Schneidmesser (11) angebrachten Vorsprunges (20) erfolgt.

7. Umformverfahren nach Anspruch 6, **dadurch gekennzeichnet, dass** der Vorsprung (20) von der Schneidkante (12) des Schneidmessers (11) beabstandet ist und bei Durchführung des Schervorgangs vor der Schneidkante (12) auf dem Blechteil (3) aufsetzt.

8. Umformverfahren nach Anspruch 1, **dadurch gekennzeichnet, dass** der Abstand 1 zwischen der Schneidkante (12) und dem Vorsprung (20) in einem Bereich liegt, der in Abhängigkeit von der Werkstückdicke s und der Höhe f des Vorsprungs folgendermaßen festgelegt ist:

$$\sigma = \frac{Mb}{wb}$$

$$\sigma = \frac{F \cdot l \cdot 6}{b \cdot h^2}$$

$$f = \frac{F \cdot l^3}{3 \cdot E \cdot I}$$

$$I = \frac{b \cdot h^3}{12}$$

$$f = \frac{R_{0,2} \cdot l^2}{E \cdot s} \cdot \frac{2}{3} \quad,$$

wobei: $R_{0,2}$ = Fließgrenze
l = Abstand
E = Elastizitätsmodul
S = Blechdicke

9. Umformverfahren nach Anspruch 1, **dadurch gekennzeichnet, dass** das Blechteil (3) an der Schnittkontur (8) mittels eines Schneidmessers (11) abgeschert wird, das in einer quer zu dem Blechteil (3) gerichteten Bewegung an der Schnittkontur (8) aufsetzt.

10. Umformverfahren nach Anspruch 1, **dadurch gekennzeichnet, dass** durch Aufrechterhaltung einer Druckspannung in dem Blechteil (3) an der dem Schneidmesser (11) und der Vorbiegeeinrichtung (19) abgewandten Seite ein Einreißen den des Blechteils (3) im Bereich der Schnittkontur (8) verhindert wird.

11. Karosserieteil-Presswerkzeug zum Umformen von hochfesten, wenig oder nicht duktilen Blechteilen (3), insbesondere aus martensitischem Stahl, und zum Biegeschneiden derselben gemäß dem Verfahren nach Anspruch 1
mit einem Unterwerkzeug (5), an dem eine Auflagefläche (16) zur Auflage des Blechteils (3) vorgesehen ist, die eine der gewünschten Schnittkontur (8) angepasste Kante (18) aufweist,
mit einem Oberwerkzeug (7), an dem ein Schneidmesser (11) vorgesehen ist, das eine der Schnittkontur (8) angepasste Schneidkante (12) aufweist, und
mit einer Vorbiegeeinrichtung (19), die in einem seitlichen Abstand zu der Schnittkontur (8) angeordnet und dazu eingerichtet ist, das Blechteil (3) mit einem Biegemoment und dadurch im Bereich der Schnittkontur (8), bevor das Schneidmesser (11) in das Werkstück (3) eindringt, mit einer Zugspannung zu belasten, die geringer ist als die Fließgrenze des Materials des Blechteils (3),
mit einem Blechhalter (17) und einem Werkstücklager (15) des Werkzeugs, deren Stirnflächen genau zueinander fluchtend angeordnet sind, und
mit einem geringen Spalt zwischen dem Blechhalter (17) und der Fläche (13) des Schneidmessers (11), der dem Schneidspalt entspricht, wie er zwischen der Stirnfläche der Kante (18) des Werkstücklagers und der Fläche (13) des Schneidmessers (11) festgelegt ist.

12. Presswerkzeug nach Anspruch 11, **dadurch gekennzeichnet, dass** die Vorbiegeeinrichtung (19) auf der Abfallseite der Schnittkontur (8) angeordnet ist.

13. Presswerkzeug nach Anspruch 11, **dadurch gekennzeichnet, dass** die Vorbiegeeinrichtung (19) durch wenigstens einen Vorsprung (20) gebildet ist, der in einem festgelegten Abstand zu der Schnittkontur (8) angeordnet ist.

14. Presswerkzeug nach Anspruch 13, **dadurch gekennzeichnet, dass** der Abstand in Abhängigkeit von der lokalen Krümmung der Schnittkontur (8) festgelegt ist.

15. Presswerkzeug nach Anspruch 13, **dadurch gekennzeichnet, dass** der Vorsprung (20) ein leistenartiger Vorsprung ist.

16. Presswerkzeug nach Anspruch 13, **dadurch gekennzeichnet, dass** der Vorsprung (20) mit dem Schneidmesser (11) verbunden ist.

17. Presswerkzeug nach Anspruch 13, **dadurch gekennzeichnet, dass** der Vorsprung (20) an einem gesonderten Element (27) ausgebildet ist.

18. Presswerkzeug nach Anspruch 17, **dadurch gekennzeichnet, dass** das gesonderte Element (27) mit einer eigenen Antriebseinrichtung verbunden ist.

19. Presswerkzeug nach Anspruch 11, **dadurch gekennzeichnet, dass** der Vorsprung (20) mit einer Kraftbegrenzungseinrichtung verbunden ist.

**Claims**

1. Forming process for the production of vehicle body parts from high-tensile metal sheets with little or no ductility, in particular made of martensitic steel, in a die (2) with at least one step for forming the sheet metal part (3) and
with at least one step, in which a cutting operation is conducted along a cutting contour (8) in the die (2), wherein before and during the cutting operation the sheet metal part (3) is subjected to a bending stress, which causes a substantial tensile force transversely to the desired cutting contour (8), wherein the yield point of the material of the sheet metal part (3) is not reached as a result of the bending stress, wherein before and during the cutting operation the sheet metal part (3) is clamped between a sheet holder (17) and a workpiece support (15) of the die, the faces of which are arranged to be exactly in alignment with one another.

2. Forming process according to claim 1, **characterised in that** the sheet metal part (3) is clamped between a supporting surface (16) and a workpiece holder (17) on a side of the cutting contour (8) to be generated.

3. Forming process according to claim 2, **characterised in that** the holding force is so great that the tensile stresses caused by the bending are absorbed by the workpiece holder (17) directly on the cutting contour (8).

4. Forming process according to claim 1, **characterised in that** the tensile stress introduced into the sheet metal part (3) is fixed close to the yield point of the respective material the workpiece is made from.

5. Forming process according to claim 1, **characterised in that** the tensile stress introduced into the sheet metal part (3) by the pre-bending is generated on the side of the sheet metal part (3), from which the cutting blade also penetrates into the sheet metal part (3).

6. Forming process according to claim 1, **characterised in that** the loading of the sheet metal part (3) with the bending moment, which generates a tensile stress (23, 24) at the cutting line (8), is achieved by means of a projection (20) attached to a cutting blade (11).

7. Forming process according to claim 6, **characterised in that** the projection (20) is spaced from the cutting edge (12) of the cutting blade (11) and locates on the sheet metal part (3) in front of the cutting edge (12) when the shearing operation is conducted.

8. Forming process according to claim 1, **characterised in that** the distance 1 between the cutting edge (12) and the projection (20) lies in a range, which is fixed in dependence on the workpiece thickness s and the height f of the projection as follows:

$$\sigma = \frac{Mb}{wb}$$

$$\sigma = \frac{F \cdot l \cdot 6}{b \cdot h^2}$$

$$f = \frac{F \cdot l^3}{3 \cdot E \cdot I}$$

$$I = \frac{b \cdot h^3}{12}$$

$$f = \frac{R_{0.2} \cdot l^3}{E \cdot s} \cdot \frac{2}{3}$$

wherein

$R_{0.2}$ = yield point
l = distance
E = modulus of elasticity
s = sheet metal thickness.

9. Forming process according to claim 1, **characterised in that** the sheet metal part (3) is sheared off at the cutting contour (8) by means of a cutting blade (11), which locates on the cutting contour (8) in a movement directed transversely to the sheet metal part (3).

10. Forming process according to claim 1, **characterised in that** tearing in the sheet metal part (3) in the region of the cutting contour (8) is prevented by maintaining a compressive stress in the sheet metal part (3) on the side remote from the cutting blade (11) and the pre-bending device (19).

11. Vehicle body part pressing die for forming high-tensile sheet metal parts (3) with little or no ductility, in particular made of martensitic steel, and for bending and cutting same according to the process of claim 1 with a lower die (5), on which a supporting surface (16), which has an edge (18) adapted to the desired cutting contour (8), is provided for supporting the sheet metal part (3),
with an upper die (7), on which a cutting blade (11) is provided, which has a cutting edge (12) adapted to the cutting contour (8), and
with an pre-bending device (19), which is arranged at a lateral distance from the cutting contour (8) and is fitted to subject the sheet metal part (3) to a bending moment and thus to a tensile stress in the region of the cutting contour (8) before the cutting blade (11) penetrates the workpiece (3), said tensile stress being less than the yield point of the material of the sheet metal part (3),
with a sheet holder (17) and a workpiece support (15) of the die, the faces of which are arranged to be exactly in alignment with one another, and
with a slight gap between the sheet holder (17) and the surface (13) of the cutting blade (11) corresponding to the cutting gap, as fixed between the face of the edge (18) of the workpiece support and the surface (13) of the cutting blade (11).

12. Pressing die according to claim 11, **characterised in that** the pre-bending device (19) is arranged on the waste side of the cutting contour (8).

13. Pressing die according to claim 11, **characterised in that** the pre-bending device (19) is formed by at least one projection (20), which is arranged at a fixed distance from the cutting contour (8).

14. Pressing die according to claim 13, **characterised in that** the distance is fixed in dependence on the local curvature of the cutting contour (8).

15. Pressing die according to claim 13, **characterised in that** the projection (20) is a bar-like projection.

16. Pressing die according to claim 13, **characterised in that** the projection (20) is connected to the cutting blade (11).

17. Pressing die according to claim 13, **characterised in that** the projection (20) is configured on a separate element (27).

18. Pressing die according to claim 17, **characterised in that** the separate element (27) is connected to its own drive device.

19. Pressing die according to claim 11, **characterised in that** the projection (20) is connected to a power limiting device.

## Revendications

1. Procédé de formage destiné à la fabrication de pièces de carrosserie à partir de tôles à haute résistance peu ou pas ductiles, en particulier en acier martensitique, dans un outil (2),
comportant au moins un pas de formage de la pièce en tôle (3) et
comportant au moins un pas lors duquel est exécutée dans l'outil (2) une opération de découpe le long d'un contour de découpe (8),
la pièce de tôle (3) étant soumise avant et pendant l'opération de découpe à une contrainte de flexion qui provoque une composante de force de traction importante transversalement au contour de découpe (8) souhaité,
la limite d'allongement du matériau de la pièce en tôle (3) n'étant pas atteinte en raison de la contrainte de flexion,
la pièce en tôle (3) étant bloquée solidement avant et pendant l'opération de découpe entre un élément de maintien de tôle (17) et un support de pièce (15) de l'outil dont les surfaces frontales sont disposées de manière à être en alignement exact l'une par rapport à l'autre.

2. Procédé de formage selon la revendication 1 **caractérisé en ce que** la pièce en tôle (3) est bloquée solidement sur un côté du contour de découpe (8) qui doit être obtenu, entre une surface d'appui (16) et un élément de maintien de pièce (17).

3. Procédé de formage selon la revendication 2 **caractérisé en ce que** la force de blocage est si importante que les contraintes de traction provoquées par la flexion sont supportées directement au niveau du contour de découpe (8) par l'élément de maintien de pièce (17).

4. Procédé de formage selon la revendication 1 **caractérisé en ce que** la contrainte de traction induite dans la pièce en tôle (3) est fixée au niveau de la limite d'allongement du matériau considéré dont la pièce est constituée.

5. Procédé de formage selon la revendication 1 **caractérisé en ce que** la contrainte de traction induite dans la pièce en tôle (3) par la flexion préalable est exercée sur le côté de la pièce en tôle (3) à partir duquel le couteau de coupe pénètre également dans la pièce en tôle (3).

6. Procédé de formage selon la revendication 1 **caractérisé en ce que** la charge que supporte la pièce en tôle (3) du fait du moment de flexion qui provoque une contrainte de traction (23, 24) au niveau de la ligne de découpe (8) est obtenue au moyen d'une saillie (20) réalisée sur un couteau de coupe (11).

7. Procédé de formage selon la revendication 6 **caractérisé en ce que** la saillie (20) est située à l'écart de l'arête de coupe (12) du couteau de coupe (11) et que, lors de l'exécution de l'opération de cisaillement, elle s'applique sur la pièce en tôle (3) avant l'arête de coupe (12).

8. Procédé de formage selon la revendication 1 **caractérisé en ce que** l'écart entre l'arête de coupe (12) et la saillie (20) se situe dans un domaine qui est déterminé de la manière suivante en fonction de l'épaisseur de la pièce (s) et de la hauteur (f) de la saillie.

$$\sigma = \frac{Mb}{\omega b}$$

$$\sigma = \frac{F \cdot l \cdot 6}{b \cdot h^2}$$

$$\int = \frac{F \cdot l^3}{3 \cdot E \cdot I}$$

$$\int = \frac{R_{0.2} \cdot l^2}{E \cdot s} \cdot \frac{2}{3}$$

$$l = \frac{b \cdot h^3}{12}$$

expressions dans lesquelles $R_{0.2}$ = limite d'allongement
$l$=écart
E =module d'élasticité
s =épaisseur de la tôle.

9. Procédé de formage selon la revendication 1 **caractérisé en ce que** la pièce en tôle (3) est cisaillée au niveau du contour de découpe (8) au moyen d'un couteau de coupe (11) qui s'applique en exécutant un mouvement orienté transversalement à la pièce en tôle (3) sur le contour de découpe (8).

10. Procédé de formage selon la revendication 1 **caractérisé en ce que** grâce au maintien d'une contrainte de compression dans la pièce en tôle (3) sur le côté situé à l'opposé du couteau de coupe (11) et du dispositif (19) de flexion préalable, une déchirure de la pièce en tôle (3) dans la zone du contour de découpe (8) se trouve empêchée.

11. Outil de presse pour pièces de carrosserie destiné au formage de pièces en tôle (3) à haute résistance peu ou pas ductiles, en particulier en acier martensitique et à la découpe sous flexion de celles-ci selon le procédé de la revendication 1,
comportant un outil inférieur (5) sur lequel est prévue une surface d'appui (16) destinée à l'appui de la pièce en tôle (3), laquelle surface d'appui présente une arête (18) adaptée au contour de découpe (8) souhaité,
comportant un outil supérieur (7) sur lequel est prévu un couteau de coupe (11) qui présente une arête de coupe (12) adaptée au contour de découpe (8), et comportant un dispositif de flexion préalable (19) qui est disposé avec un écart latéral par rapport au contour de découpe (8) et qui est agencé de manière à soumettre la pièce en tôle (3) à un moment de flexion et de ce fait à une contrainte de traction dans la zone du contour de découpe (8) avant que le couteau de coupe (11) pénètre dans la pièce (3), cette contrainte de traction étant inférieure à la limite d'allongement du matériau de la pièce en tôle (3),
comportant un élément de maintien de tôle (17) et un support de pièce (15) de l'outil, dont les surfaces frontales sont disposées de manière à être précisément à niveau l'une par rapport à l'autre, et comportant une fente de faible dimension entre l'élément de maintien de tôle (17) et la surface (13) du couteau de coupe (11) qui correspond à la fente de coupe telle que celle-ci est déterminée entre la surface frontale de l'arête (18) du support de pièce et la surface (13) du couteau de coupe (11).

12. Outil de presse selon la revendication 11 **caractérisé en ce que** le dispositif de flexion préalable (19) est disposé du côté déchet du contour de découpe (8).

13. Outil de presse selon la revendication 11 **caractérisé en ce que** le dispositif (19) de flexion préalable est constitué d'au moins une saillie (20) qui se situe avec un écart déterminé par rapport au contour de découpe (8).

14. Outil de presse selon la revendication 13 **caractérisé en ce que** l'écart est déterminé en fonction de la courbure locale du contour de découpe (8).

15. Outil de presse selon la revendication 13 **caractérisé en ce que** la saillie (20) est une saillie du genre barrette.

16. Outil de presse selon la revendication 13 **caractérisé en ce que** la saillie (20) est reliée au couteau de coupe (11).

17. Outil de presse selon la revendication 13 **caractérisé en ce que** la saillie (20) est constituée d'un élément séparé (27).

18. Outil de presse selon la revendication 17 **caractérisé en ce que** l'élément séparé (27) est relié à un dispositif d'entraînement qui lui est propre.

19. Outil de presse selon la revendication 11 **caractérisé en ce que** la saillie (20) est reliée à un dispositif de limitation de force.

Fig.1

Fig.2

**Fig.3**

**Fig.4**

Fig.5

Fig.6

EP 1 623 782 B1

Fig.7

Fig.8

14

Fig.9

Fig.10

Fig.11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2739825 A
- US 4742742 A
- US 3183575 A
- FR 2690097 A